# EUROPÄISCHE PATENTANMELDUNG

(11) **EP 4 711 191 A1**
(43) Veröffentlichungstag der Anmeldung: **18.03.2026**
(21) Anmeldenummer: 25198199.9
(22) Anmeldetag: 26.08.2025
(51) Int. Cl.: B60L 53/16, H01R 13/52

(54) **LADESTECKER MIT VERGUSSKRAGEN**

(30) Priorität: 03.09.2024 DE 102024125152
(71) Anmelder: Amphenol Tuchel Industrial GmbH, 74080 Heilbronn (DE)
(72) Erfinder: GÖRL, Ann-Kathrin, 74251 Lehrensteinsfeld (DE)
(74) Vertreter: Staeger & Sperling Partnerschaftsgesellschaft mbB

(57) **Zusammenfassung**

Die Erfindung betrifft einen Ladestecker mit wenigstens zwei Kontaktelementen zur lösbaren, elektrisch leitenden Verbindung eines batterieelektrischen Fahrzeugs mit einer Ladestation, aufweisend ein Ladesteckergehäuse zur Einhausung der wenigstens zwei Kontaktelemente, wobei ein Vergusskragen wenigstens bereichsweise in dem Ladesteckergehäuse angeordnet ist und die Kontaktelemente wenigstens in einem Abschnitt umschließt, sodass ein Abdichtungsraum für das Vergießen mit einer Vergussmasse bereitgestellt ist.

## Beschreibung

Die Erfindung betrifft einen Ladestecker mit wenigstens zwei Kontaktelementen zur lösbaren, elektrisch leitenden Verbindung eines batterieelektrischen Fahrzeugs mit einer Ladestation, aufweisend ein Ladesteckergehäuse zur Einhausung der wenigstens zwei Kontaktelemente.

Zur Kontaktierung oder Herstellung lösbarer, elektrisch leitender Verbindungen werden Steckverbinder in unterschiedlichsten Ausbildungen und Varianten eingesetzt. Steckverbindungslösungen sind in einer Vielzahl verschiedener Ausbildungen verfügbar, beispielsweise hinsichtlich der Polzahl, elektrischer Leistungen und der Konditionierung unterschiedlichster äußerer Einwirkungen wie Feuchte, Temperatur, korrosive Medien oder mechanischer Belastungen.

Je nach Umgebungsbedingungen und den sich daraus ergebenden Einwirkungen muss sichergestellt sein, dass die Kontaktierungsaufgabe dauerhaft, zuverlässig und störungsfrei realisiert wird. Um dieses Ziel zu erreichen sind Schutzarten definiert worden, welche durch IP-Codes (IP = International Protection) ausgedrückt werden und denen Prüfungsverfahren mit verschiedenen Umgebungsbedingungen hinterlegt sind.

Steckverbinder, insbesondere zur Realisierung verschiedener Schutzarten beziehungsweise IP-Codes, IP-Klassen, sind in vielen Fällen von Gehäusen umschlossen, eingehaust, teil- oder vollständig abgedichtet oder auch abgeschirmt. Andere Anforderung wie beispielsweise Abdichtung der Kontaktierungselemente, Zugentlastung der angeschlagenen elektrisch leitenden Kabel und Leitungen, Kontaktierungsvielzahl auf engem Raum und so weiter können weitere besondere Anforderungen an Steckverbindergehäuse nach sich ziehen.

Versorgungs- und Ladeströme können grundsätzlich als Gleichströme oder als Wechselströme übertragen werden, wobei insbesondere Ladeströme und Hochstrombereiche in Form von Gleichstrom eine große Stromstärke, beispielsweise größer als 200 A oder sogar größer als 300 A oder gar 350 A, aufweisen und zu einer Erwärmung des Kabels genauso wie eines mit dem Kabel verbundenen Hochstromkontaktes führen können.

Um batterieelektrisch angetriebene Lastkraftwagen schnell und effizient aufladen zu können sind in der Regel noch höhere elektrische Ladeleistungen erforderlich. Ein sogenanntes Megawatt Charging System Standard (Abkürzung MCS) soll als Schnellladesystem in der Zukunft Anwendung finden und soll eine Ladeleistung von bis zu 3,75 Megawatt ermöglichen, wobei die Spannung bis zu 1.250 V und der Ladestrom bis zu 3.000 A aufweisen kann.

Unabhängig von der Spezifikation des Ladesteckers oder der Ladesteckerdose (beispielsweise nach der Norm IEC 62196-2 oder IEC 62196-3 oder CHAdeMO-Standard oder nach dem Megawatt Charging System Standard) ist es insbesondere bei höheren und hohen Ladeleistungen ganz besonders wichtig, dass Ladestecker und/oder Ladesteckerdosen sehr sorgfältig und zuverlässig abgedichtet sind. Bei Ladesteckern für batterieelektrisch angetriebene Kraftfahrzeuge werden aus diesem Grund häufig Vergussmassen zusätzlich oder in Kombination mit Dichtungen eingesetzt, um Abdichtungen von Kabeln und Kontaktierungselementen von Ladesteckern mit hoher Abdichtungszuverlässigkeit zu erreichen.

Das Gebrauchsmuster DE 20 2016 102 392 U1 beschreibt eine Lösung von Kabeldurchführungen in Ladesteckern in Form einer gedichteten Umspritz-Adapterhülse, aufweisend ein endseitiges Gewinde, um mit einem Gegengewinde des Steckverbindergehäuse verbunden zu werden und die Umspritz-Adapterhülse einen innen verlaufenden Kanal zur Durchführung eines Kabels aufweist, wobei ferner an dem Außenmantel der Umspritz-Adapterhülse mehrere Rippen und/oder Nuten vorgesehen sind und der Bereich mit den Rippen und/oder Nuten zur gemeinsamen Umspritzung mit einem Kunststoff in einem Umspritzwerkzeug mit einem Kabel ausgebildet ist.

Einen gewinkelten Ladestecker für Elektrofahrzeuge schlägt die WO 2024/033051 A1 vor, bei welchem die Abdichtung der beiden Ladesteckergehäuseteile durch eine Vergussmasse erfolgt.

Einen Ladestecker mit Schirmungseinrichtungen zeigt die DE 20 2012 000 421 U1. Dieser vorzugsweise winkelige Ladestecker ist als Hochvoltladestecker konzipiert und wird mittels Vergussmasse zuverlässig abgedichtet.

Nachteilig an bestehenden Abdichtungslösungen mit Vergussmassen ist die häufig fehlende Möglichkeit, die Vergussqualität nach dem Vergießen kontrollieren zu können. Für die Abdichtungsqualität ist es entscheidend, dass das Vergussmaterial den Abdichtungsraum zwischen den abzudichtenden Elementen vollständig ausfüllt. Das bedeutet, dass das Vergussmaterial keine Hohlräume, Fehlstellen oder Lunker bildet, sondern vielmehr der Abdichtungsraum vollständig dichtgespeist ist. Um möglichst materialsparend und damit wirtschaftlich vorzugehen, werden die Abdichtungsräume möglichst volumenreduziert ausgeführt, was in vielen Fällen zu einer reduzierten Wandstärke des Abdichtungsraumes führt. Die daraus resultierende schmale Fließspalte verstärkt das Problem des fehlerfreien Vergusses.

Ein weiteres Problem der Lösungen des Standes der Technik ist die geometrisch bedingte Unmöglichkeit, Vergussmassen als Abdichtung einzusetzen. In einigen Fällen insbesondere bei MCS-Ladesteckern ist ein Verguss wegen fehlender Bereitstellung von Abdichtungsräumen nicht möglich.

Es ist Aufgabe der Erfindung Ladestecker mit Kontaktelementen zur lösbaren, elektrisch leitenden Verbindung hinsichtlich ihrer Abdichtung weiterzuentwickeln sowie die im Stand der Technik auftretenden Nachteile wenigstens teilweise zu reduzieren.

Die Erfindung schlägt dazu eine Möglichkeit vor, die Abdichtung durch eine Vergussmasse in Ladesteckern mit Kontaktelementen umzusetzen und eine Konstruktion zu schaffen, die die Vergussqualität nach dem Vergießen kontrollierbar macht. Wegen der hohen Dichtigkeitsanforderungen bei MCS-Ladesteckern mit Gleichspannungskontaktelementen (DC-Kontaktelemente) ist die Umsetzung des erfindungsgemäßen Gedankens hier besonders vorteilhaft.

Erfindungsgemäß ist vorgesehen, dass ein Vergusskragen als Bestandteil des Ladesteckers an dem Ladesteckergehäuse angeordnet ist, der die Kontaktelemente und die Leitungen für die Stromzuführung auf der der Steckbewegungsrichtung des Ladesteckers abgewandten Richtung wenigstens bereichsweise umschließt. Der Vergusskragen schafft auf diese Weise einen Abdichtungsraum, der das Vergießen mit einer Vergussmasse ermöglicht.

Die Kontaktelemente sind parallel und beabstandet zueinander innerhalb des Ladesteckers angeordnet, deren Mittelachsen sind vorzugsweise parallel ausgerichtet. Der Vergusskragen umschließt die Kontaktelemente sowie gegebenenfalls weitere in diesem Bereich des Ladesteckers angeordnete Elemente, beispielsweise Zuleitungen für Kühlfluide oder Messeinrichtungen.

Der Vergusskragen kann Vergusskragenkammern aufweisen, die den Abdichtungsraum innerhalb des Vergusskragens in Abdichtungskammern teilt. Dadurch ist es möglich, den Vergussmassenbedarf auf einzelne Abdichtungskammern und damit gezielte Bereiche innerhalb des Vergusskragens einzustellen. Darüber hinaus kann die gezielte geometrische Einstellung der Abdichtungskammern erfolgen.

Die geometrische Anpassbarkeit des Vergusskragens und der Abdichtungskammern nutzt die Erfindung, um verbesserte Einfüllbedingungen der Vergussmasse in den Abdichtungsraum beziehungsweise die Abdichtungskammern zu schaffen und gleichzeitig eine optische Kontrollmöglichkeit für die Vergussqualität nach dem Vergießen bereitzustellen. Die Erfindung sieht deshalb vor, dass der Vergusskragen zwei seitlich angeordnete Ausbuchtungen aufweist. Zusätzlich kann eine weitere mittige Ausbuchtung vorgesehen sein. Im Ergebnis weist der Vergusskragen einen falterform- oder schmetterlingsformähnlichen Querschnitt auf. Die seitlichen Ausbuchtungen bieten die Möglichkeit einer sehr guten Zugänglichkeit für das Einfüllen von Vergussmasse in den jeweiligen Abdichtungsraum und gleichzeitig kann optisch kontrolliert werden, ob die Vergussmasse den Abdichtungsraum vollständig ausfüllt.

Durch die Verwendung von Vergussmasse zur Abdichtung von Ladesteckern und der erfindungsgemäßen Geometriegestaltung des Abdichtungsraumes ergeben sich in vorteilhafter Weise eine sehr hohe Abdichtungssicherheit, dessen Kontrollmöglichkeit und eine gesteigerte mechanische Festigkeit des gesamten Ladesteckerbereiches durch die ausgehärtete Vergussmasse.

Die Erfindung wird im Folgenden anhand eines exemplarischen Ausführungsbeispiels in Verbindung mit den Figuren näher erläutert. Dabei zeigen:
- Fig. 1: eine Seitenansicht des Ladesteckers mit der Ausrichtung in Steckrichtung gesehen;
- Fig. 2: eine perspektivische Ansicht des Ladesteckers ohne hinteres Ladesteckergehäuseteil.

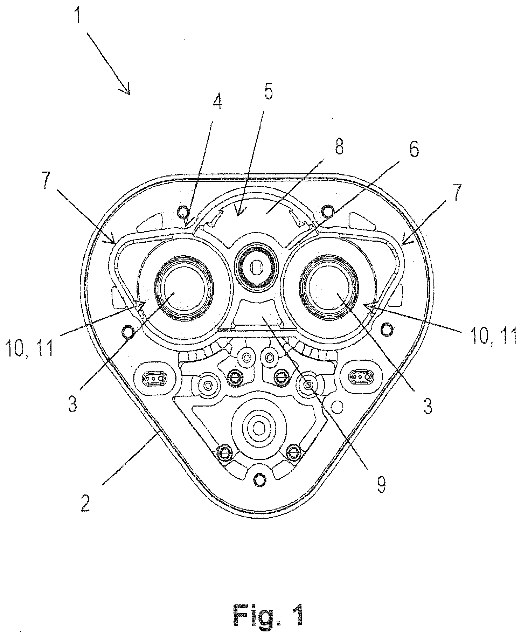

Fig. 1 zeigt eine Seitenansicht des Ladesteckers 1 mit der Ausrichtung in Steckrichtung SR gesehen, das heißt in Figur 1 ist die der Steckrichtung SR abgewandte Stirnseite des Ladesteckers 1 abgebildet.

Das in Fig. 1 gezeigte, exemplarische Ausführungsbeispiel zeigt einen Ladestecker 1 ausgebildet als MCS-Ladestecker mit Gleichspannungskontaktelementen. Die Kontaktelemente 3 sind innerhalb des Ladesteckergehäuses 2 achsensymmetrisch und mit zueinander parallelen Mittelachsen angeordnet. Vorzugsweise sind die Mittelachsen der Kontaktelemente 3 auch achsenparallel zur Ladesteckermittelachse.

Der erfindungsgemäße Vergusskragen 4 ist als integraler Bestandteil des Ladesteckers 1 ausgebildet oder kann alternativ als separates Bauteil mit dem Ladestecker 1 gekoppelt sein und umschließt die Kontaktelemente 3 zusammen mit den Bereichen zwischen den Kontaktelementen 3. Der Vergusskragen 4 ist in Längsrichtung einseitig offen, sodass Vergussmasse einfüllbar und die Bauteile innerhalb es von dem Vergusskragen 4 umschlossenen Bereiches zugänglich sind. Die Vergussmasse ist in den Figuren nicht dargestellt.

Die Querschnittskontur des Vergusskragens 4 ist schmetterlingsformähnlich oder falterformähnlich ausgebildet durch eine erste und wenigstens eine zweite seitliche Ausbuchtung 7, jeweils angrenzend an die Kontaktelemente 3. Der Bereich zwischen den Kontaktelementen 3 wird von dem Vergusskragen 4 umschlossen und weist eine Vergusskragenkammer 5 auf. Die Vergusskragenkammer 5 wird vorzugsweise durch wenigstens eine Kammerwandung 6 in Teilkammern aufgeteilt.

Die Aufteilung der Vergusskragenkammer 5 dieses gezeigten Ausführungsbeispiels erfolgt in eine mittige Ausbuchtung 8 und/oder eine Hohlkammer 9. In die mittige Ausbuchtung 8 und die Hohlkammer 9 kann eine Vergussmasse eingefüllt sein, vorzugsweise bleiben diese Bereiche jedoch leer und bilden Hohlräume.

Im benachbarten Umfeld der Kontaktelemente 3 sind durch die wenigstens eine Kammerwandung 6, den Vergusskragen 4 und die jeweils seitlichen Ausbuchtungen 7 jedem Kontaktelement 3 ein zugeordneter Abdichtungsraum 10 gebildet, welche jeweils eine Abdichtungskammer 11 für die Vergussmasse bereitstellen. In die Abdichtungskammern 11 ist Vergussmasse einfüllbar, wobei infolge der seitlichen Ausbuchtungen 7 sowohl die Zugänglichkeit zu den Abdichtungskammern 11 gewährleistet ist als auch das vollständige Ausfüllen der Abdichtungskammer 11 mit Vergussmasse optisch kontrollierbar ist.

Besonders vorteilhaft ist auch das durch die seitlichen Ausbuchtungen 7 bewirkte Fließverhalten und die Fließwegstrecke der Vergussmasse. Ausgehend von der Eingussstelle hinein in die seitlichen Ausbuchtungen 7 umfließt die Vergussmasse in Teilen zunächst die Wandung der Kontaktelemente 3, um dann mit steigendem Füllstand quasi von unten steigend die Abdichtungskammer 11 zu füllen. Diese Ausbildung der Fließfront bewirkt ein fehler-, lunker- und fehlstellenfreies Befüllen der Abdichtungskammern 11 mit Vergussmasse.

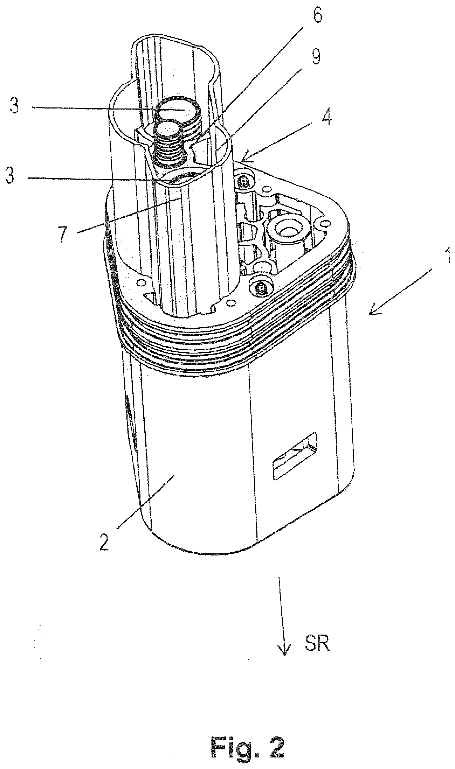

Fig. 2 zeigt eine perspektivische Ansicht des Ladesteckers 1 ohne hinteres Ladesteckergehäuseteil. In der Längserstreckung des Ladesteckers 1 überkragt der Vergusskragen 4 ausgehend von seiner Basis an dem Ladesteckergehäuse 2 die Kontaktelemente 3. Da die Festlegungsmittel für die Zuleitungen beziehungsweise Stromkabel - hier beispielhaft dargestellt als Gewindeabschnitte für zum Beispiel Überwurfmuttern - nach dem Vergießen mit Vergussmasse zugänglich sein müssen, enden die Abdichtungskammern 11 unterhalb der endseitigen Längserstreckungskante des Vergusskragens 4. Die Vergussmasse wird in die Abdichtungskammern 11 eingegossen, derart, dass die Festlegungsmittel der Kontaktelemente 3 frei zugänglich bleiben. Die Längserstreckungsoberkante der Kammerwandung 6 begrenzt die Abdichtungskammern 11 in axialer Richtung des Ladesteckers 1.

### Bezugszeichenliste

- 1: Ladestecker
- 2: Ladesteckergehäuse
- 3: Kontaktelement
- 4: Vergusskragen
- 5: Vergusskragenkammer
- 6: Kammerwandung
- 7: seitliche Ausbuchtung
- 8: mittige Ausbuchtung
- 9: Hohlkammer
- 10: Abdichtungsraum
- 11: Abdichtungskammer

- SR: Steckrichtung

## Patentansprüche

1. Ladestecker (1) mit wenigstens zwei Kontaktelementen (3) zur lösbaren, elektrisch leitenden Verbindung eines batterieelektrischen Fahrzeugs mit einer Ladestation, aufweisend ein Ladesteckergehäuse (2) zur Einhausung der wenigstens zwei Kontaktelemente (3), **dadurch gekennzeichnet, dass** ein Vergusskragen (4) wenigstens bereichsweise in dem Ladesteckergehäuse (2) angeordnet ist und die Kontaktelemente (3) wenigstens in einem Abschnitt umschließt, sodass ein Abdichtungsraum (10) für das Vergießen mit einer Vergussmasse bereitgestellt ist.

2. Ladestecker (1) gemäß Anspruch 1, **dadurch gekennzeichnet, dass** der Vergusskragen (4) eine Vergusskragenkammer (5) aufweist.

3. Ladestecker (1) gemäß Anspruch 2, **dadurch gekennzeichnet, dass** der Vergusskragen (4) wenigstens eine Kammerwandung (6) aufweist, sodass die Vergusskragenkammer (5) in Teilkammern aufgeteilt ist.

4. Ladestecker (1) gemäß Anspruch 3, **dadurch gekennzeichnet, dass** wenigstens eine Teilkammer der Vergusskragenkammer (5) eine mittige Ausbuchtung (8) ist.

5. Ladestecker (1) gemäß Anspruch 4, **dadurch gekennzeichnet, dass** wenigstens eine Teilkammer der Vergusskragenkammer (5) eine Hohlkammer (9) ist.

6. Ladestecker (1) gemäß Anspruch 4 und 5, **dadurch gekennzeichnet, dass** die mittige Ausbuchtung (8) und die Hohlkammer (9) Hohlräume ohne Vergussmasse bilden.

7. Ladestecker (1) gemäß Anspruch 3, **dadurch gekennzeichnet, dass** eine Teilkammer jeweils ein Kontaktelement (3) umschließender Abdichtungsraum (10) ist, welcher wenigstens teilweise eine Abdichtungskammer (11) bereitstellt.

8. Ladestecker (1) gemäß Anspruch 7, **dadurch gekennzeichnet, dass** in die Abdichtungskammer (11) Vergussmasse einfüllbar ist.

9. Ladestecker (1) gemäß Anspruch 7, **dadurch gekennzeichnet, dass** die Abdichtungsräume (10) bereichsweise durch jeweils eine seitliche Ausbuchtung (7) des Vergusskragens (4) gebildet sind.

10. Ladestecker (1) gemäß Anspruch 1, **dadurch gekennzeichnet, dass** der Ladestecker (1) ein MCS-Ladestecker ist.
